# DEMANDE DE BREVET EUROPEEN

(11) **EP 3 422 725 A2**
(43) Date de publication de la demande: **02.01.2019**
(21) Numéro de dépôt: 18180877.5
(22) Date de dépôt: 29.06.2018
(51) Int. Cl.: H04N 21/222, H04N 21/43, H04N 21/6332, H04N 21/81, H04N 21/8547

(54) **PROCÉDÉ DE COMMANDE D'UN SERVEUR DE SYNCHRONISATION ET ÉQUIPEMENT POUR LA MISE EN OEUVRE DU PROCÉDÉ**

(30) Priorité: 30.06.2017 FR 1756096
(71) Demandeur: Orange, 75015 Paris (FR)
(72) Inventeur: SOYER, Emmanuel, 92130 ISSY LES MOULINEAUX (FR); LE BIHAN, Murièle, 35150 AMANLIS (FR); ACKET, Yves, 35000 RENNES (FR)
(74) Mandataire: Cabinet Beau de Loménie

(57) **Abrégé**

Un procédé de commande de synchronisation dans un équipement passerelle de synchronisation est proposé, qui comprend : recevoir des premières métadonnées relatives à un premier contenu audiovisuel, les métadonnées comprenant un identifiant de contenu audiovisuel, un premier identifiant de canal de diffusion télévisuelle, et une information d'horodatage ; obtenir un identifiant d'un élément d'interactivité utilisateur à partir de l'identifiant de contenu audiovisuel ; obtenir une information d'horodatage de présentation d'un élément d'interactivité utilisateur à partir de l'information d'horodatage reçue ; et transmettre, de manière synchronisée avec l'information d'horodatage de présentation de l'élément d'interactivité, une requête de présentation de l'élément d'interactivité utilisateur correspondant à l'identifiant d'élément d'interactivité utilisateur, la requête comprenant l'identifiant de l'élément d'interactivité utilisateur.

## Description

La présente invention se rapporte à un procédé de commande d'un serveur de synchronisation, en particulier pour la restitution d'un contenu multimédia, et à un dispositif pour la mise en oeuvre de ce procédé.

La distribution de contenus audiovisuels produits par des régies de production de contenus s'effectue généralement par voie hertzienne, par satellite, et/ou par câble par transmission des contenus vers un équipement se trouvant sur la chaîne de distribution (par exemple un décodeur de télévision, ou, en anglais, « *Set Top Box* » (STB)), en utilisant la technologie de multidiffusion IP (pour « Internet Protocol ») multicast. Dans le cas de contenus diffusés vers un décodeur de télévision, un système tête de réseau diffuse vers le décodeur des flux de données contenant les contenus audiovisuels, par exemple conformément à une norme de diffusion de la télévision numérique de la famille de normes DVB (de l'anglais « Digital Video Broadcasting »).

Sur réception d'un flux de données transportant un contenu audiovisuel, l'équipement récepteur du flux effectue un traitement des données reçues (analyse de séquence vidéo, décompression, décodage, etc.), puis le contenu audiovisuel est restitué à l'utilisateur par une lecture des trames vidéo du flux et de la bande-son associée, avec affichage sur un écran d'un dispositif de restitution (par exemple un téléviseur), qui peut être intégré ou non à l'équipement utilisateur.

Par restitution d'un flux multimédia de type audiovisuel sur un dispositif de restitution, on entend ici l'affichage d'au moins une partie vidéo du flux sur un écran du dispositif de restitution et la restitution d'au moins une partie audio du flux multimédia sur un ou des haut-parleurs du dispositif de restitution. A titre d'alternative, lorsque le flux multimédia est de type audio, par exemple un flux diffusé par une station de radio, et la restitution du flux comprend uniquement la restitution du flux sur un ou des haut-parleurs du dispositif de restitution.

Différents services d'interactivité utilisateur ont été développés ces dernières années afin de permettre à un utilisateur visionnant un contenu audiovisuel en cours de restitution sur un dispositif de restitution d'interagir avec un service selon un ensemble prédéterminé d'actions définies au regard du contexte, c'est-à-dire du contenu audiovisuel en cours de visionnage.

Le standard HBBTV (pour Hybrid Broadcast Broadband TV) fournit un exemple de ce type d'initiative. HBBTV permet aux chaînes de télévision de publier en plus et en accompagnement de leurs programmes télévisés, des contenus additionnels. Le mode HBBTV de diffusion (en anglais « broadcast ») permet de publier ces contenus additionnels avec le flux diffusé (que le mode de diffusion soit la TNT, le câble, ou le satellite). L'utilisateur est invité par une notification sur son écran de télévision à accéder au contenu additionnel en appuyant sur le bouton rouge de sa télécommande. Le mode HBBTV large bande (en anglais, « broadband ») est prévu pour le cas de figure où le récepteur de télévision est connecté à Internet, par le biais d'un fournisseur d'accès à Internet.

La fourniture de services interactifs pose le problème de la synchronisation des contenus complémentaires avec la diffusion des contenus principaux correspondants. Ce problème est d'autant plus aigü pour des contenus principaux courts, comme le sont typiquement les contenus de type publicitaires, qui requièrent une synchronisation d'autant plus précise qu'ils sont courts. Dans le cas d'un contenu principal de type spot publicitaire (dont la durée n'excède en général pas 30 secondes) et d'un contenu secondaire de type invitation de l'utilisateur à se connecter sur un site Internet relatif au produit objet du spot publicitaire, il est souhaitable d'assurer une synchronisation de la présentation du contenu secondaire avec la diffusion du contenu principal à la seconde près.

Les procédés de synchronisation connus reposent sur l'insertion manuelle par un technicien du contenu complémentaire dans le flux transportant le contenu principal correspondant. Ces manipulations manuelles sont sujettes aux erreurs, et ne sont pas porteuses d'un développement massif des services de télévision interactive.

Il existe ainsi un besoin pour un procédé de synchronisation de la présentation d'un contenu additionnel relatif à un contenu audiovisuel principal avec la restitution sur un dispositif de restitution du contenu audiovisuel principal ne présentant pas les inconvénients exposés ci-dessus.

Un objet de la présente invention est de proposer un procédé amélioré, notamment en ce qu'il est automatisé, de synchronisation de la présentation d'un contenu additionnel relatif à un contenu audiovisuel principal.

Selon un premier aspect, il est proposé un procédé de commande de synchronisation comprenant, dans un équipement passerelle de synchronisation, recevoir des premières métadonnées relatives à un premier contenu audiovisuel, les métadonnées comprenant un identifiant de contenu audiovisuel, un premier identifiant de canal de diffusion télévisuelle, et une information d'horodatage, obtenir un identifiant d'un élément d'interactivité utilisateur à partir de l'identifiant de contenu audiovisuel, obtenir une information d'horodatage de présentation d'un élément d'interactivité utilisateur à partir de l'information d'horodatage reçue, et transmettre, de manière synchronisée avec l'information d'horodatage de présentation de l'élément d'interactivité, une requête de présentation de l'élément d'interactivité utilisateur correspondant à l'identifiant d'élément d'interactivité utilisateur, la requête comprenant l'identifiant de l'élément d'interactivité utilisateur.

Dans un ou plusieurs modes de réalisation, le procédé proposé comporte en outre :
- une étape d'obtention d'un deuxième identifiant de canal de diffusion télévisuelle à partir du premier identifiant de canal de diffusion télévisuelle,
ledit deuxième identifiant de canal de diffusion télévisuelle étant transmis dans ladite requête de présentation de l'élément d'interactivité utilisateur.

Le procédé proposé permet avantageusement d'obtenir une synchronisation fine (typiquement à la seconde près) de la présentation d'un élément d'interactivité utilisateur par rapport à la diffusion d'un contenu audiovisuel correspondant, en déterminant la synchronisation de la présentation de l'élément d'interactivité utilisateur par rapport à un événement de la diffusion de contenus audiovisuel vers un dispositif de restitution de l'utilisateur.

De plus, le procédé proposé permet avantageusement d'obtenir une synchronisation fine de la présentation d'un élément d'interactivité utilisateur tout en automatisant la commande de synchronisation, ce qui évite les erreurs humaines et facilite le développement d'un service d'interactions utilisateur synchronisées sur tout type de contenu audiovisuel distribué sur un réseau de distribution de contenus.

En fonction du mode de réalisation, l'information d'horodatage reçue peut comprendre une estampille temporelle de diffusion du premier contenu audiovisuel, ou en variante comprendre une estampille temporelle requise ou souhaitée de présentation de l'élément d'interactivité utilisateur.

Dans un ou plusieurs modes de réalisation, la requête de présentation de l'élément d'interactivité utilisateur est transmise à un système de diffusion de contenus audiovisuels pour présentation de l'élément d'interactivité utilisateur par affichage sur un écran d'un dispositif de restitution d'un utilisateur d'un deuxième contenu audiovisuel correspondant à l'élément d'interactivité utilisateur. Dans ce cas de figure, la requête de présentation de l'élément d'interactivité utilisateur peut être transmise à un serveur d'insertion d'élément de description (EIT) du système de diffusion de contenus audiovisuels. En outre, la requête de présentation de l'élément d'interactivité utilisateur peut comprendre une information de durée de présentation de l'élément d'interactivité utilisateur par affichage sur l'écran du deuxième contenu audiovisuel.

Dans un ou plusieurs modes de réalisation, la requête de présentation de l'élément d'interactivité utilisateur est transmise à un équipement utilisateur pour présentation de l'élément d'interactivité utilisateur sur une interface utilisateur de l'équipement utilisateur.

Dans un ou plusieurs modes de réalisation, le procédé proposé comprend en outre : recevoir des deuxièmes métadonnées relatives au premier contenu audiovisuel, les deuxièmes métadonnées comprenant l'identifiant de contenu audiovisuel et une deuxième information d'horodatage de diffusion du premier contenu audiovisuel, et mettre à jour la deuxième information d'horodatage de diffusion du premier contenu audiovisuel avec la première information d'horodatage de diffusion du premier contenu audiovisuel. Cela permet avantageusement la mise à jour des métadonnées reçues par la passerelle de synchronisation, notamment dans les cas où l'heure de diffusion du premier contenu audiovisuel est modifiée (par ex. cas de reprogrammation de dernière minute) ou la diffusion de ce contenu est annulée.

Dans un ou plusieurs modes de réalisation, la première information d'horodatage de diffusion du premier contenu audiovisuel comprend un horodatage de début de diffusion du premier contenu audiovisuel, et la deuxième information d'horodatage de présentation de l'élément d'interactivité utilisateur correspond à l'horodatage de début de diffusion du premier contenu audiovisuel auquel un décalage temporel est appliqué. L'utilisation d'un décalage temporel permet avantageusement de prendre en compte le délai de propagation de l'information de synchronisation d'un élément d'interactivité jusqu'à l'affichage sur un écran de cet élément d'interactivité. Par exemple, ce délai de propagation pourra être compensé en anticipant l'envoi des requêtes de présentation d'élément d'interactivité, en déclenchant l'envoi des requêtes N secondes (par exemple 5 secondes) avant l'information d'horodatage reçue lorsque cette information d'horodatage est une estampille temporelle de présentation de l'élément d'interactivité utilisateur.

Selon un deuxième aspect, il est proposé un dispositif passerelle de synchronisation comprenant: un contrôleur comprenant un processeur, une unité d'interface comprenant une unité d'interface avec un sous-système tête de réseau et/ou une unité d'interface avec un serveur de notifications équipement utilisateur, une mémoire, et une unité de commande de synchronisation couplées de manière opérationnelle au contrôleur, et configurées pour la mise en oeuvre d'un procédé de commande de synchronisation proposé dans les présentes.

Un autre aspect concerne un programme d'ordinateur, chargeable dans une mémoire associée à un processeur, et comprenant des portions de code pour la mise en oeuvre d'un procédé de commande de synchronisation proposé dans les présentes lors de l'exécution dudit programme par le processeur.

Un autre aspect concerne un ensemble de données représentant, par exemple par voie de compression ou d'encodage, un programme d'ordinateur tel que proposé.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à une mémoire et à un module d'interface entrées/sorties, conduire l'ordinateur à commander la synchronisation de présentation d'éléments d'interactivité utilisateur selon un procédé de commande de synchronisation proposé dans les présentes.

D'autres particularités et avantages de la présente invention apparaîtront dans la description ci-après d'exemples de réalisation non limitatifs, en référence aux dessins annexés, dans lesquels :
- la figure 1 est un schéma illustrant l'architecture d'un système de diffusion de contenus audiovisuels selon un ou plusieurs modes de réalisation ;
- la figure 2 est un diagramme illustrant le procédé proposé selon un mode de réalisation ;
- la figure 3 est un schéma illustrant l'architecture d'un système de notification vers un équipement utilisateur selon un ou plusieurs modes de réalisation ;
- la figure 4 est un diagramme illustrant un dispositif passerelle de synchronisation selon un ou plusieurs modes de réalisation.

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

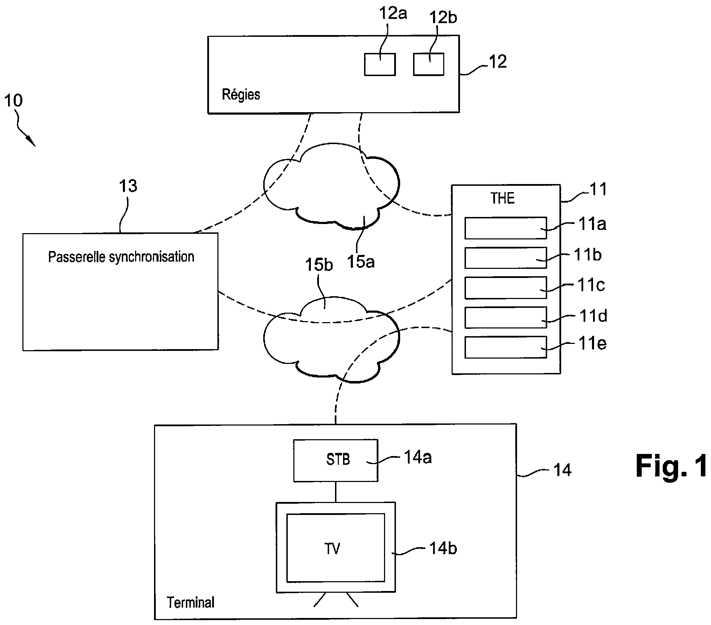

La figure 1 montre l'architecture d'un système (10) de diffusion de contenus audiovisuels dans un ou plusieurs modes de réalisation.

Sur la figure 1, les lignes en pointillés indiquent à titre d'illustration et de manière non exhaustive les différents liens de communication de données qui peuvent exister entre les noeuds du système de diffusion de contenus (10) représentés sur la figure.

Le système de diffusion (10) comprend un sous-système tête de réseau (THE) (11), un sous-système régie (12), un sous-système de synchronisation (13) et un sous-système terminal (14).

Les sous-systèmes tête de réseau (THE) (11), régie (12), synchronisation (13) et terminal (14) sont interconnectés par un ou plusieurs réseaux de communication (15a, 15b), afin notamment de permettre la diffusion des contenus audiovisuels depuis le sous-système régie (12) jusqu'au sous-système terminal (14).

Le sous-système régie (12) peut comprendre une ou plusieurs régies de production et/ou diffusion de contenus audiovisuels (12a, 12b), correspondant respectivement par exemple à des chaines de télévision. Dans un mode de réalisation, on peut en outre distinguer des régies de production de contenus.

La diffusion de contenus audiovisuels produits par les régies peut être effectuée par voie hertzienne, par satellite, et/ou par câble en utilisant la technologie IP multicast, conformément à une norme de diffusion de la télévision numérique, par exemple de la famille de normes DVB.

Le sous-système tête de réseau (11) (en anglais, « TV Head End », ou THE) est configuré pour générer et diffuser des flux de données transportant des contenus audiovisuels fournis par le sous-système régie (12). Il comprend, dans un ou plusieurs modes de réalisation, un serveur de contrôle de flux (11a), un serveur d'insertion EIT (11b), un ou plusieurs encodeurs de flux vidéo (11c), un serveur de multiplexage (11d), et un serveur passerelle (11e). Le serveur de contrôle de flux (11a) comprend une interface configurée pour recevoir des notifications ou des requêtes de déclenchement d'affichage et gère l'insertion de ces notifications et requêtes dans le flux de transport (en anglais, « transport stream ») diffusé vers le sous-système terminal (14).

L'EIT (en anglais, « Event information Table ») est une table comprise dans l'ensemble de données DVB/SI diffusée dans le flux vidéo au format MPEG 'de l'anglais « Motion Picture Expert Group ») véhiculant des informations relatives au programme de télévision en cours (c'est-à-dire au contenu audiovisuel en cours de diffusion pour la chaine de télévision concernée), des informations concernant le programme de télévision suivant le programme en cours, et des données privées.

Le sous-système régie (12) fournit au sous-système THE (11) des données de contenus audiovisuels et des métadonnées décrivant les contenus audiovisuels. Dans un ou plusieurs modes de réalisation, ces métadonnées comprennent une grille de programmes (en anglais, « Electronic Program Guide », ou EPG) comprenant des informations relatives aux contenus audiovisuels. Ces informations peuvent comprendre, d'une part, des informations décrivant chaque contenu, telles qu'un identifiant de chaine, un identifiant de contenu, un titre de contenu, un type de contenu, une durée de contenu, et d'autre part des informations relatives à la diffusion de chaque contenu, telles qu'une date de diffusion, une heure de diffusion (sous la forme par exemple d'une heure de début de diffusion et d'une durée de diffusion, ou d'une heure de début de diffusion et d'une heure de fin de diffusion).

Dans un ou plusieurs modes de réalisation, le sous-système régie (12) est en outre configuré pour fournir au sous-système synchronisation (13) des métadonnées (appelées *PlayList*) relatives aux contenus audiovisuels fournis au sous-système THE (11). Ces métadonnées *PlayList* peuvent comprendre, pour un contenu audiovisuel (CAVi), un identifiant de contenu audiovisuel (CAVi_id), un identifiant de chaine de télévision (Channel_Id) sur laquelle il est prévu de diffuser le contenu audiovisuel (CAVi) et une information d'horodatage de diffusion du contenu audiovisuel, comme par exemple une information de début de diffusion de contenu, éventuellement accompagnée d'une information de durée de diffusion du contenu audioviosuel (Start_Time_CAVi, Duration_CAVi).

Le sous-système terminal (14) comprend une passerelle multimédia (14a), de type décodeur TV (en anglais, « Set-Top-Box », STB), ou de type stick TV commandé par une application exécutée sur un terminal utilisateur (par exemple un smartphone ou une tablette). La passerelle multimédia est apte à recevoir des flux de données transportant des contenus audiovisuels fournis par le sous-système THE (12), à les traiter (le traitement de ces flux comprenant typiquement : analyse de séquence vidéo, décompression, décodage en fonction du type d'encodage utilisé pour encoder les flux reçus, etc.) et à les préparer après traitement pour les délivrer à un dispositif de restitution (14b), qui peut être de type téléviseur, connecté à la passerelle multimédia (14a). De façon connue, les moyens de connexion au réseau peuvent être, par exemple, de type x-DSL, fibre ou encore 3G.

Le sous-système de synchronisation (13) permet avantageusement d'effectuer une synchronisation, par exemple à la seconde près, entre la restitution sur le dispositif de restitution (14b) d'un contenu transporté par un flux de données diffusé par le sous-système de tête de réseau THE (11) et la notification d'un élément d'interactivité utilisateur (aussi appelé « *Call To Action* », ou CTA).

Dans un ou plusieurs modes de réalisation, le sous-système de synchronisation (13) peut comprendre une passerelle de synchronisation configurée, par exemple par le biais d'interfaces applicatives (en anglais, « Application Programming Interface », ou API), pour communiquer d'une part avec le sous-système régie (12), et d'autre part avec le sous-système tête de réseau (11).

Dans un ou plusieurs modes de réalisation, la notification d'un élément d'interactivité utilisateur peut prendre la forme d'un affichage d'un module d'interactivité sur l'écran du dispositif de restitution (14b).

Le module d'interactivité peut typiquement prendre la forme d'un encart affiché sur une partie de l'écran du dispositif de restitution (14b). Il peut en outre être conçu pour permettre à l'utilisateur de lancer un widget interactif ou de recevoir une notification d'événement sur un écran compagnon (par exemple un écran d'équipement utilisateur, tel qu'un smartphone ou une tablette).

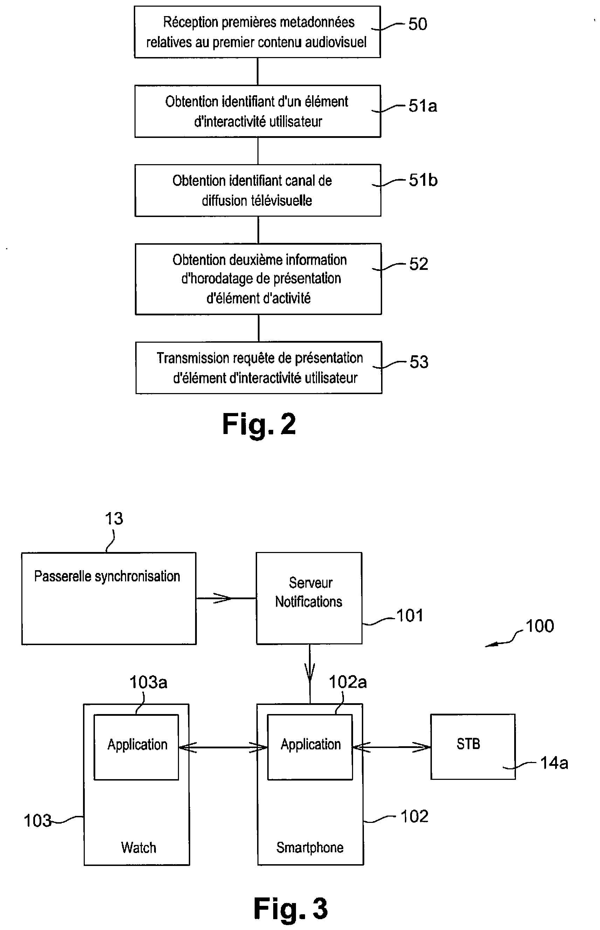

La figure 2 montre un diagramme illustrant le procédé proposé selon un mode de réalisation.

On considère un système de diffusion de contenus audiovisuels tel que celui illustré par la figure 1.

En référence à la figure 1, le procédé proposé peut être avantageusement mis en oeuvre par un nouveau noeud fonctionnel, la passerelle de synchronisation (13a), qui est apte à communiquer avec le sous-système de régie (12) opéré par une ou plusieurs chaînes de télévision d'une part, et avec le sous-système de tête de réseau (11) d'autre part.

Dans un ou plusieurs modes de réalisation, la passerelle de synchronisation (13a) reçoit (50) depuis le sous-système de régie (12) des premières métadonnées relatives à un premier contenu audiovisuel (CAVi). Ces métadonnées comprennent un identifiant de contenu audiovisuel (CAVi_id), un identifiant de chaine de télévision (Channel_Id) sur laquelle il est prévu de diffuser le contenu audiovisuel (CAVi) et une première information d'horodatage, qui peut correspondre à l'horodatage de diffusion du premier contenu audiovisuel (CAVi) ou bien, en variante, à l'horodatage demandé de présentation d'un élément d'interactivité utilisateur. En fonction du mode de réalisation, les métadonnées peuvent être reçues dans un ou plusieurs messages, c'est-à-dire conjointement ou séparément.

De manière générale, la régie de diffusion d'une chaine de télévision est chargée de l'élaboration de la Grille de Programmation, de la construction de la liste de diffusion et de la diffusion des chaines TV. La Grille de Programmation contient l'ensemble des informations de diffusion relatives à toutes les émissions de la journée (heure de début, heure de fin, durée, nom, catégorie, ...).

Dans un ou plusieurs modes de réalisation visant à fournir un service de promotion interactive, la Grille de Programmation peut être enrichie avec un code identifiant unique pour chacune des publicités devant déclencher de la promotion interactive.

Dans ce contexte, le procédé proposé peut utiliser un identifiant de contenu audiovisuel de type PubID (identifiant de publicité) tel que défini par le Syndicat National de la Publicité Télévisée (SNPTV). Par exemple, l'identifiant FR_AGEN_ANNO_PROD_0012_030_F est un identifiant PubID (ID PubID) dans lequel FR est un code pays, AGEN est un code unique identifiant l'agence-conseil de publicité à l'origine du film publicitaire, ANNO est un code unique identifiant l'annonceur, PROD est le code produit attribué au produit par l'agence, 0012 est un numéro d'identification unique du film pour le produit PROD, 0030 indique la durée en secondes du film, et F est une valeur par défaut qui indique qu'il s'agit d'un film finalisé. L'identifiant de type PubID peut être attribué par le service d'attribution d'identifiants uniques de l'interprofession publicitaire tv française, PubID.

Dans un ou plusieurs modes de réalisation, les métadonnées sont reçues par la passerelle de synchronisation (13) sur une interface applicative utilisant le protocole de transfert de données HTTP (de l'anglais « *HyperText Transfer Protocol* »). L'interface de communication de la passerelle de synchronisation (13) pourra aussi être choisie pour permettre des échanges de données sécurisés depuis et vers le sous-système de régie (12). Par exemple, l'interface de communication sur un réseau local 53a pourra mettre en oeuvre un protocole de communication conforme à la norme HTTP sécurisé (en anglais, *« HyperText Transfer Protocol Secure* »), par exemple en utilisant une connexion sécurisée de type WebSocket (conforme à la spécification (« *Request for Comments* ») RFC6455 « The WebSocket Protocol » de l'IETF (de l'anglais « *Internet Engineering Task Force »)).*

Le sous-système de régie (12) pourra, dans un ou plusieurs modes de réalisation, transmettre à la passerelle de synchronisation (13) une ou plusieurs requêtes au format HTTP pour lui transmettre des PlayLists qui correspondent à des PlayLists initiales, ou à des mises à jour de PlayLists déjà transmises à la passerelle de synchronisation (13).

Un exemple de requête HTTP pouvant être utilisé dans un ou plusieurs modes de réalisation est fourni en Annexe 1 des présentes. Dans cet exemple, une partie des métadonnées, en l'occurrence un identifiant de canal de diffusion télévisuelle (identifiant de chaine) est intégrée dans l'URL d'un message http de type « PUT », une autre partie des métadonnées (identifiant de contenu audiovisuel, information d'horodatage de diffusion du contenu audiovisuel) étant intégrée au format XML (de l'anglais « *eXtended Markup Language* »), dans le corps de message HTTP.

En fonction du mode de réalisation, la passerelle de synchronisation (13) pourra recevoir un ou plusieurs ensembles de métadonnées correspondant respectivement à une chaine de télévision ou bien, en variante, un ensemble de métadonnées correspondant à une agrégation de métadonnées pour plusieurs chaines de télévision.

Ainsi, dans un mode de réalisation correspondant à l'exemple de l'Annexe 1, une requête http de type « PUT » peut être envoyée pour des métadonnées correspondant à une chaine de télévision, un identifiant de la chaine étant renseigné dans le champ « URL » porté par le message, les autres métadonnées transmises à la passerelle de synchronisation étant portées dans le corps du message HTTP.

Dans ce mode de réalisation, les métadonnées transmises dans le corps du message HTTP peuvent comprendre les éléments suivants :
DateCréation: Date de création de la Playlist par la régie. La passerelle de synchronisation peut avantageusement utiliser ce paramètre dans la gestion de sa prise en compte des Playlists.

Elément dit « Top Synchro », comprenant les événements suivants:
CAVi_Id : identifiant du contenu audiovisuel.
TopDépart: Estampille temporelle d'affichage souhaité d'un élément d'interactivité utilisateur.
Durée: durée du contenu audiovisuel (par exemple en secondes).

Certaines caractéristiques de ces paramètres (caractère optionnel ou non, type, format de valeur), dans un ou plusieurs modes de réalisation dans le cas où le premier contenu audiovisuel est un spot publicitaire, sont présentées ci-après :

| Paramètre | Optionnel ? | Type | Valorisation |
|---|---|---|---|
| DateCréation | Oui | Chaine de caractères | Norme ISO 8601. |
| CAVi-Id | Non | Chaine de caractères | Utiliser par exemple le PubID SNPTV. En variante un identifiant technique de publicité pourra être utilisé (ex: PHA25U5G1) |

| Paramètre | Optionnel ? | Type | Valorisation |
|---|---|---|---|
| TopDépart | Oui | Chaine de caractères | Date et heure à la norme ISO 8601. On pourra utiliser l'heure locale. Par exemple: 2016-08-28T09:00:59 |
| Durée | Non | Chaine de caractères | Durée de contenu. Norme ISO 8601. Exemple : PT25S (publicité de 25 secondes). |

Le paramètre de « Durée » est optionnel, et pourra être, dans certains modes de réalisation, avantageusement utilisé par la passerelle de synchronisation (13) pour effectuer un contrôle de synchronisation. Par exemple, si la durée de publicité est inférieure à la durée d'affichage de l'élément d'interactivité, la passerelle de synchronisation (13) ne créé/modifie pas de requête de présentation de l'élément d'interactivité et renvoie un code erreur.

L'Annexe 2 des présentes fournit quant à elle un exemple de réponse à requête HTTP pouvant être utilisée dans un ou plusieurs modes de réalisation. Par exemple, le header HTTP de réponse peut retourner un HTTP « status » 200 OK en cas de réussite de la requête. En cas de non conformité de la requête, une erreur 400 peut être renvoyée, éventuellement avec des informations identifiant plus spécifiquement l'erreur. En cas d'erreur du coté serveur de la passerelle de synchronisation, une erreur 500 est peut être renvoyée.

En fonction du mode de réalisation, les cas d'erreurs identifiés peuvent être, par exemple :
∘ Identifiant de contenu inconnu: dans le cas où l'identifiant de contenu référencé n'a pas été provisionné sur la passerelle de synchronisation (par exemple il est absent d'une table de correspondance préconfigurée Identifiant de CAV -> Identifiant d'élément d'interactivité CTA).
∘ identifiant de canal de diffusion TV inconnu: dans le cas où l'identifiant de canal de diffusion TV n'a pas été provisionné sur la passerelle de synchronisation (par exemple il n'est pas référencé dans table de correspondance préconfigurée: identifiant de canal de diffusion TV -> empreinte MD5 de l'identifiant de canal de diffusion TV).
∘ TopDépart erroné: date dépassée.

Dans un autre mode de réalisation, la passerelle de synchronisation (13) pourra recevoir un ensemble de métadonnées correspondant à une agrégation de métadonnées pour plusieurs chaînes de télévision. Dans ce mode de réalisation, une requête HTTP de type « PUT » pourra être envoyée pour ces métadonnées, un ensemble de paramètres indiquant l'identifiant de la chaine, l'identifiant du contenu audiovisuel, et une information d'horodatage, étant portés dans le corps du message HTTP

Comme indiqué ci-dessus, les métadonnées reçues par la passerelle de synchronisation (13) peuvent correspondre, dans un ou plusieurs modes de réalisation, aux contenus audiovisuels qui sont fournis par le sous-système de régie (12) au sous-système tête de réseau (11) d'un opérateur pour diffusion via le réseau de distribution de contenus audiovisuels de l'opérateur.

Les métadonnées reçues sont ensuite traitées pour obtenir, d'une part (51a), un identifiant d'un élément d'interactivité utilisateur (*CTA_id*) à partir de l'identifiant de contenu audiovisuel reçu (*CAVi_id*), et d'autre part (51b), un deuxième identifiant de canal de diffusion télévisuelle à partir du premier identifiant de canal de diffusion télévisuelle.

Dans un ou plusieurs modes de réalisation, l'obtention de l'identifiant de l'élément d'interactivité utilisateur peut être effectuée en utilisant une table mettant en correspondance des identifiants de contenu audiovisuel (*CAVI_id*) et des identifiants d'élément d'interactivité (*CTA_id*). Ceci permet d'associer de manière flexible des contenus audiovisuels avec des éléments d'interactivité utilisateur, qui peuvent en particulier avoir été définis par différentes entités. Dans ce cas de figure, la table de correspondance peut avoir été préconfigurée en mémoire de la passerelle de synchronisation.

Par exemple, dans le cas où le premier contenu audiovisuel est un spot publicitaire, ce contenu peut avoir été produit par une des régies du sous-système de régie (12), par exemple la régie publicitaire d'une chaîne de télévision. A la différence de l'élément d'interactivité utilisateur, qui peut avoir été défini directement par l'annonceur publicitaire en accord avec l'opérateur de télécommunication qui pilote la passerelle de synchronisation, et ce sans que la chaîne de télévision n'ait été informée des éléments d'interactivité utilisateur correspondant à certains contenus diffusés. L'opérateur peut ainsi construire une table de correspondance entre des éléments d'interactivité utilisateur qui ont été définis avec l'annonceur publicitaire, et des identifiants de contenu audiovisuels correspondants (les spots publicitaires).

Le format choisi pour les identifiants d'élément d'interactivité utilisés pour la mise en oeuvre du procédé proposé pourra varier en fonction du mode de réalisation. Par exemple, on pourra utiliser une nomenclature d'identification de CTA de type « CTA-CH-S-SERVICE-RESEAU-STB », où « CTA » indique qu'il s'agit d'un Call To Action, c'est-à-dire d'un élément d'interactivité utilisateur, « CH » identifie une chaine de télévision (par son nom ou son acronyme, par exemple), « S » indique qu'il s'agit d'un élément d'interactivité utilisateur synchronisé, « SERVICE » identifie un service associé à l'élément d'interactivité utilisateur (par exemple par son nom ou son acronyme), par exemple le nom d'un jeu télévisé dans le cas où l'élément d'interactivité est associé à ce jeu (par exemple pour un vote des téléspectateurs), et « RESEAU-STB » désigne le mode de réception IPTV (par ex. ADSL large-bande, fibre, etc.) et les modèles de décodeurs TV.

Les métadonnées relatives au contenu audiovisuel permettent à l'opérateur de connaître l'heure prévue de diffusion par la chaîne de télévision du contenu audiovisuel ou, en variante, l'heure souhaitée par la chaîne de télévision de présentation de l'élément d'interactivité utilisateur, et la passerelle de synchronisation peut être configurée pour obtenir un identifiant d'élément d'interactivité utilisateur (*CTA_id*) correspondant au contenu audiovisuel programmé pour diffusion sur la chaine identifiée dans les métadonnées reçues.

Le traitement des métadonnées reçues comprend en outre l'obtention d'un deuxième identifiant de canal de diffusion télévisuelle sur la base du premier identifiant de canal de diffusion télévisuelle. La passerelle de synchronisation peut pour ce faire être préconfigurée avec une table de correspondance entre identifiants de canal de diffusion télévisuelle.

Dans un ou plusieurs modes de réalisation, le deuxième identifiant de canal de diffusion télévisuelle peut être d'un format différent du premier identifiant de canal de diffusion télévisuelle. Cela peut permettre dans un mode de réalisation de transposer le premier identifiant de canal de diffusion télévisuelle (dans un format d'identifiant de canal utilisé par le système de diffusion de contenus (11)) vers un format d'identifiant de canal exploitable par le sous-système régie (12) et défini dans l'interface de communication entre le sous-système régie (12) et la passerelle de synchronisation (13). Par exemple, le deuxième identifiant de canal de diffusion télévisuelle peut correspondre à une empreinte MD5 (de l'anglais « Message Digest 5 ») du premier identifiant de canal de diffusion télévisuelle, pré-calculée et renseignée dans une table de correspondance.

Une fois l'élément d'interactivité utilisateur identifié, une information d'horodatage de présentation d'élément d'interactivité utilisateur est obtenue (52) sur la base de la première information d'horodatage de diffusion du premier contenu audiovisuel.

Dans un ou plusieurs modes de réalisation, l'obtention de l'information d'horodatage de présentation de l'élément d'interactivité utilisateur peut comprendre la génération de cette information, par exemple en reprenant l'information d'horodatage de diffusion du premier contenu audiovisuel reçue du sous-système de régie (12). En variante, un décalage temporel peut être introduit, par exemple pour déclencher la présentation de l'élément d'interactivité utilisateur à l'heure de début de diffusion du premier contenu audiovisuel augmentée d'un décalage. Pour un spot publicitaire dont la durée n'excède en général pas trente secondes, ce décalage peut être de l'ordre de quelques secondes. Ce décalage permet en outre avantageusement d'ajuster l'horodatage de diffusion « broadcast » fourni par la chaine avec l'horodatage de diffusion IP multicast maitrisé par l'opérateur.

En fonction du mode de réalisation, la valeur du décalage temporel appliqué peut être prédéfinie, ou déterminée de manière dynamique, par exemple en fonction du contenu audiovisuel et/ou en fonction de l'élément d'interactivité utilisateur. La durée du contenu audiovisuel (au plus 30 secondes pour un spot publicitaire, ou plusieurs heures pour certains jeux télévisés) peut être prise en compte pour déterminer une valeur de décalage temporel. La durée de présentation de l'élément d'interactivité utilisateur peut aussi être prise en compte pour la détermination de la valeur de décalage temporel appliqué.

Une requête de présentation de l'élément d'interactivité utilisateur correspondant à l'identifiant d'élément interactivité utilisateur est ensuite générée puis transmise (53) par la passerelle de synchronisation. La requête comprend, dans un ou plusieurs modes de réalisation, l'identifiant de l'élément d'interactivité utilisateur, et le deuxième identifiant de canal de diffusion télévisuelle. La passerelle de synchronisation gère la transmission synchronisée de la requête, en fonction de la deuxième information d'horodatage de présentation de l'élément d'interactivité utilisateur obtenue précédemment. Par exemple, la transmission de la requête peut être déclenchée par la passerelle de synchronisation à un instant correspondant à la deuxième information d'horodatage de présentation de l'élément d'interactivité utilisateur obtenue précédemment.

Dans un ou plusieurs modes de réalisation, l'interface entre le sous-système régie (12) et la passerelle de synchronisation (13a) peut être prévue pour l'envoi à intervalles réguliers par le sous-système régie (12) de métadonnées relatives à un contenu audiovisuel, le traitement des métadonnées reçues comprenant la mise à jour des informations d'horodatage de diffusion du contenu audiovisuel sur la base des dernières métadonnées reçues relatives au contenu audiovisuel.

Cette mise à jour peut aussi être ponctuelle, c'est-à-dire non nécessairement régulière, afin par exemple de s'adapter à un décalage temporel (typiquement un retard) de la diffusion de contenus audiovisuels par une chaine de télévision par rapport à l'horaire de diffusion initialement prévu, ou à un changement de contenu audiovisuel prévu pour être diffusé à une date donnée.

Dans ces cas de figure, le procédé peut comprendre la réception de deuxièmes métadonnées relatives au premier contenu audiovisuel, les deuxièmes métadonnées comprenant l'identifiant de contenu audiovisuel et une deuxième information d'horodatage de diffusion du premier contenu audiovisuel, et mettre à jour la deuxième information d'horodatage de diffusion du premier contenu audiovisuel avec la première information d'horodatage de diffusion du premier contenu audiovisuel. Les deuxièmes métadonnées auront alors été reçues avant les premières métadonnées, et les informations d'horodatage de diffusion du contenu audiovisuel comprises dans les deuxièmes métadonnées auront été mises à jour sur la base des informations d'horodatage de diffusion du contenu audiovisuel reçues comprises dans premières métadonnées.

Aussi, pour gérer une reprogrammation (et notamment le décalage quasi systématique de diffusion des publicités sur les tranches horaires de 12h45 et 19h45), la régie pourra diffuser une mise à jour des métadonnées de synchronisation dans laquelle elle modifiera l'information d'horodatage associé aux contenus dont la diffusion est décalée (identifiés par exemple par des paramètres identifiant/canal (chaine) de diffusion). La passerelle de synchronisation pourra être configurée pour prendre en compte cette mise à jour en mettant à jour, dans sa Playlist, l'information d'horodatage associée au contenu (correspondant au couple identifiant/canal (chaine) de diffusion) reprogrammé.

De manière similaire, pour gérer une déprogrammation, la régie pourra diffuser une mise à jour des métadonnées de synchronisation dans laquelle elle supprimera l'information d'horodatage associé aux contenus dont la diffusion est déprogrammée. La passerelle de synchronisation pourra être configurée pour prendre en compte cette mise à jour en supprimant de sa Playlist, l'information d'horodatage associée au contenu (correspondant au couple identifiant/canal (chaine) de diffusion) déprogrammé.

Le procédé proposé peut être mis en oeuvre au moyen de composants logiciels et/ou matériels. Dans cette optique, les termes « module » et « unité » peuvent correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit pour le module ou l'unité concerné.

Un composant logiciel correspond à un ou plusieurs programmes d'ordinateur exécutable par un processeur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (passerelle multimédia, équipement utilisateur, terminal, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré (comme un circuit intégré pour application spécifique (ASIC, de l'anglais « *Application-Specific Integrated Circuit* »), un système sur puce (SOC, de l'anglais « *System On Chip* »), une carte à puce, une carte électronique pour l'exécution d'un micrologiciel (firmware), etc.

Les *SOC* sont des systèmes embarqués qui intègrent tous les composants d'un système électronique dans une puce unique. Un *ASIC* est un circuit électronique spécialisé qui regroupe des fonctionnalités sur mesure pour une application donnée. Les ASIC sont généralement configurés lors de leur fabrication et ne peuvent être que simulés par l'utilisateur.

Un procédé de commande tel que proposé peut également utiliser des architectures hybrides, comme par exemple des architectures basées sur un CPU+FPGA, un GPU (de l'anglais « *Graphics Processing Unit* ») ou un MPPA (de l'anglais « *Multi-Purpose Processor Array* »).

Le procédé proposé peut en outre être mis en oeuvre sous forme d'une combinaison d'éléments logiciels et matériels, comme par exemple un programme logiciel destiné à être chargé et exécuté sur un composant de type circuits logiques programmables (FPGA, de l'anglais « *Field Programmable Gate Array* »)*.* Les *FPGA* sont des circuits électroniques reconfigurables par l'utilisateur.

Dans un ou plusieurs modes de réalisation, l'élément d'interactivité utilisateur est un deuxième contenu audiovisuel destiné à être présenté à l'utilisateur par restitution sur un dispositif de restitution de l'utilisateur. Le deuxième contenu audiovisuel peut par exemple être présenté sur un téléviseur de l'utilisateur sous la forme d'un encart présenté sur une partie seulement de l'écran du téléviseur. L'utilisateur peut effectuer une commande, par exemple à partir de la télécommande du téléviseur ou à partir de la télécommande de la STB, pour déclencher l'exécution par le téléviseur d'un programme d'ordinateur configuré pour exécuter un navigateur Web et ouvrir dans ce navigateur une page Web correspondant à une adresse préconfigurée dans laquelle l'utilisateur peut naviguer à partir de sa télécommande.

Dans ce cas de figure, la requête de présentation de l'élément d'interactivité utilisateur peut être transmise par la passerelle de synchronisation au sous-système de tête de réseau pour que le deuxième contenu audiovisuel soit inséré dans un flux audiovisuel transportant le premier contenu audiovisuel et diffusé par le sous-système de tête de réseau, et qu'il soit présenté de manière synchronisée avec la restitution du premier contenu audiovisuel.

Dans un ou plusieurs modes de réalisation, il peut y avoir plusieurs identifiants d'élément d'interactivité utilisateur correspondant à un même identifiant de contenu audiovisuel, et donc plusieurs requêtes distinctes émises vers le sous-système tête de réseau pour un même identifiant de contenu audiovisuel. Cela peut être le cas en particulier dans un mode de réalisation dans lequel un identifiant d'élément d'interactivité utilisateur distinct est créé pour chaque environnement technique de diffusion (IPTV diffusée par la fibre) et chaque profil ou modèle de STB.

Lorsque le sous-système tête de réseau a une architecture de type celle illustrée sur la figure 1, la requête de présentation peut être transmise au serveur de contrôle de flux (11a) du sous-système tête de réseau (11). En variante, la requête de présentation peut être transmise à un serveur d'insertion d'élément de description (EIT) (11b) du sous-système tête de réseau (11).

Dans un mode de réalisation où la requête de présentation est transmise au serveur de contrôle de flux (11a) du sous-système tête de réseau (11), la requête de présentation peut prendre la forme d'un ou de plusieurs fichiers FTP/XML, comprenant l'identifiant d'élément d'interactivité utilisateur, un identifiant de la chaine de télévision correspondant au flux audiovisuel dans lequel l'élément d'interactivité doit être inséré, et une information de durée pendant laquelle l'élément d'interactivité doit être présenté.

Sur réception de la requête, le serveur de contrôle de flux peut transmettre au serveur d'insertion d'EITs une requête (par exemple au format XML) d'insertion dans les données privées de l'EIT relative au flux audiovisuel de la chaine de télévision les informations relatives aux éléments d'interactivité utilisateur synchronisés.

L'élément d'interactivité utilisateur est donc inclus dans un flux audiovisuel transmis au sous-système terminal (14) illustré sur la Figure 1. Ce flux est traité par la passerelle multimédia (14a) puis livré après traitements au dispositif de restitution (14b) connecté à la passerelle multimédia (14a). Dans un ou plusieurs modes de réalisation, les traitements effectués par la passerelle multimédia (14a) incluent une analyse des EITs des chaines de télévision susceptibles de recevoir des éléments d'interactivité utilisateur avec un identifiant donné. Sur détection d'un identifiant d'élément d'interactivité utilisateur recherché, la passerelle multimédia commande l'affichage sur le dispositif de restitution du deuxième contenu audiovisuel correspondant à l'élément d'interactivité utilisateur détecté, le deuxième contenu audiovisuel ayant été au préalable configuré sur la passerelle multimédia.

Dans un autre mode de réalisation, complémentaire ou alternatif du mode de réalisation dans lequel l'élément d'interactivité utilisateur est un deuxième contenu audiovisuel, l'élément d'interactivité utilisateur prend la forme d'un message transmis vers un équipement utilisateur (par exemple un smartphone ou une tablette).

Dans le cas où cet équipement utilisateur est doté d'un écran d'affichage, l'écran d'affichage peut être considéré comme un écran compagnon de l'écran du dispositif de restitution sur lequel est affiché le premier contenu audiovisuel, éventuellement avec un élément d'interactivité utilisateur prenant la forme d'un deuxième contenu.

Dans ce cas de figure, la requête de présentation d'élément d'interactivité utilisateur est transmise, de manière synchronisée avec la deuxième information d'horodatage, vers un serveur de notifications vers équipement utilisateur, pour livraison d'un message à un équipement utilisateur, comme illustré sur la Figure 3.

L'élément d'interactivité utilisateur peut alors par exemple comprendre un coupon de promotion, c'est-à-dire un élément d'information décrivant une promotion (par exemple un code barre permettant de bénéficier d'une remise, démarche pour mise à disposition d'un échantillon, pour prise de rendez-vous, ou la mise en alerte d'un programme (pour éviter que l'utilisateur ne manque un programme qu'il souhaite regarder lors de sa diffusion) lors de la diffusion d'une bande annonce promotionnelle sur la chaine de télévision, etc.), envoyé sur un équipement utilisateur par un message, par exemple un message SMS.

La figure 3 montre l'architecture d'un système (100) de notification vers un équipement utilisateur dans un ou plusieurs modes de réalisation de l'invention. Les éléments identiques ou correspondants à ceux illustrés sur la figure 1 portent la même référence.

Sur la figure 3, les lignes indiquent à titre d'illustration et de manière non exhaustive les différents liens de communication de données qui peuvent exister entre les noeuds du système de notification vers un équipement utilisateur (100) représentés sur la figure.

En référence à la figure 3, le système de notification (100) comprend, dans un ou plusieurs modes de réalisation, un sous-système de synchronisation (13) de type décrit ci-dessus en relation avec la figure 1, un serveur de notification (101) connecté au sous-système de synchronisation (13), un équipement utilisateur principal (par exemple un smartphone, ou une tablette) (102), une passerelle multimédia (14a) et un équipement utilisateur secondaire (par exemple une montre connectée) (103) fournissant un déport d'affichage de l'affichage sur l'écran de l'équipement utilisateur principal (102).

Comme décrit ci-dessus, le sous-système de synchronisation peut comprendre une passerelle de synchronisation (13) configurée pour communiquer, par le biais d'un ou plusieurs réseaux de communication, avec un sous-système de régie (12) opéré par une ou plusieurs chaînes de télévision d'une part, et avec un sous-système de tête de réseau (11) d'autre part.

L'équipement utilisateur principal (102) est adapté pour la mise en oeuvre d'une application compagnon (102a), et comprend typiquement un écran, par exemple tactile, pour l'affichage d'une interface utilisateur graphique (GUI, pour « *Graphical User Interface* ») de l'application compagnon (102a), un microphone pour l'enregistrement de commandes vocales et d'autres interfaces d'entrée configurées en fonction du mode de réalisation de l'application compagnon (102a) pour l'entrée de commandes utilisateur de l'application.

Dans un ou plusieurs modes de réalisation, l'équipement utilisateur principal (102) comprend une mémoire, une unité de traitement, équipée par exemple d'un processeur P, et pilotée par une ou plusieurs applications, notamment l'application compagnon (102a) dédiée à gestion des notifications reçues du serveur de notifications (101), ou un programme d'ordinateur, configurés pour la mise en oeuvre d'un ou plusieurs modes de réalisation du procédé proposé.

A l'initialisation, les instructions de code du programme d'ordinateur sont par exemple chargées dans une mémoire RAM avant d'être exécutées par le processeur de l'unité de traitement. Le processeur de l'unité de traitement est configuré pour mettre en oeuvre le procédé de commande selon au moins un mode de réalisation, selon les instructions du programme d'ordinateur, pour recevoir des notifications et traiter les notifications reçues.

L'équipement utilisateur principal (102) peut être un téléphone portable, par exemple un smartphone, une tablette, un ordinateur, un composant électronique, ou un autre appareil comportant un module de communication, un module interface utilisateur (comprenant par exemple un écran, un microphone, un haut-parleur, un clavier) et un processeur couplé de manière opérationnelle à une mémoire, ainsi que, selon le mode de réalisation choisi, d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire ou le support de stockage amovible contient des instructions qui, lorsqu'elles sont exécutées par l'unité de traitement, amènent cette unité de traitement à recevoir des notifications et traiter les notifications reçues selon au moins un mode de mise en oeuvre du procédé proposé.

L'équipement utilisateur secondaire (103) peut être une montre, un dispositif électronique, un composant électronique, ou un autre appareil comportant une interface utilisateur (comme par exemple un écran d'affichage), un module de communication, et une unité de traitement comprenant un processeur couplé de manière opérationnelle à une mémoire, ainsi que, selon le mode de réalisation choisi, d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire ou le support de stockage amovible contient des instructions qui, lorsqu'elles sont exécutées par l'unité de traitement, exécute une application compagnon (103a) du deuxième équipement utilisateur, configurée pour échanger des messages avec l'application compagnon (102a) de l'équipement utilisateur principal et à piloter l'interface utilisateur pour la présentation à l'utilisateur des éléments d'interactivité utilisateur reçus selon un ou plusieurs modes de réalisation des procédés proposés.

Dans le cadre du procédé illustré sur la figure 2, et en référence à la figure 3, la requête de présentation de l'élément d'interactivité utilisateur, qui comprend l'identifiant de l'élément d'interactivité utilisateur et le deuxième identifiant de canal de diffusion télévisuelle, peut ainsi être transmise au serveur de notifications (101).

L'utilisation d'un format différent pour le deuxième identifiant de canal de diffusion télévisuelle en comparaison du premier identifiant de canal de diffusion télévisuelle reçu par la passerelle de synchronisation (13) peut permettre dans un mode de réalisation de transposer le premier identifiant de canal de diffusion télévisuelle vers un format d'identifiant de canal exploitable par le serveur de notifications (101) et défini dans l'interface de communication entre le serveur de notifications (101) et la passerelle de synchronisation (13).

Le serveur de notifications (101) transmet la requête à l'équipement utilisateur principal (102), éventuellement par le biais d'un serveur de service de notifications (non représenté sur la figure) en fonction du type de système d'exploitation (par exemple iOS ou Android) exécuté sur l'équipement utilisateur principal (102).

Dans un ou plusieurs modes de réalisation, l'application dédiée (102a) exécutée sur l'équipement utilisateur principal (102) est configurée pour communiquer avec la passerelle multimédia (14a) du sous-système terminal (14) par le biais d'une interface de programmation (API), notamment pour interroger la passerelle multimédia (14a) sur le contenu audiovisuel en cours de visionnage.

Dans un mode de réalisation où pour obtenir un flux audiovisuel la passerelle multimédia (14a) s'abonne à une adresse de diffusion multicast correspondant au flux souhaité, l'équipement utilisateur principal (102) interroge la passerelle multimédia (14a) afin de connaître quel flux IPTV est en cours de réception. La connaissance du flux IPTV en cours de visionnage permet, par exemple par réconciliation de cette information avec les données d'un programme de diffusion (par exemple un EPG), d'identifier le contenu audiovisuel en cours de restitution sur le dispositif de restitution (14b) connecté à la passerelle multimédia (14a). En variante, l'équipement utilisateur principal (102) interroge la passerelle multimédia (14a) afin de connaitre quelle chaine de télévision est en cours de visionnage par l'utilisateur.

Dans un ou plusieurs modes de réalisation, lorsqu'il est déterminé que le contenu audiovisuel en cours de visionnage sur le dispositif de restitution (14b) par le biais de la passerelle de service (14a) correspond au premier contenu audiovisuel auquel correspond l'élément d'interactivité utilisateur ou, en variante, lorsqu'il est déterminé que la chaine en cours de visionnage correspond à l'identifiant de canal de diffusion télévisuelle compris dans la requête de présentation reçue du serveur de notifications (101), l'élément d'interactivité utilisateur est présenté par l'application dédiée (102a) de l'équipement utilisateur principal (102) sur l'interface utilisateur, par exemple sous la forme d'une notification (message SMS, message email, message vocal, etc.) destinée à l'utilisateur de l'équipement utilisateur principal (102).

Si, au contraire, il est déterminé que l'élément d'interactivité utilisateur reçu du serveur de notifications (101) ne correspond pas à un contenu audiovisuel en cours de visionnage par le biais de la passerelle de service (14a), ou, en variante, s'il est déterminé que la chaîne en cours de visionnage ne correspond pas à l'identifiant de canal de diffusion télévisuelle compris dans la requête de présentation reçue du serveur de notifications (101), l'élément d'interactivité utilisateur n'est pas présenté par l'application dédiée (102a) de l'équipement utilisateur principal (102) sur l'interface utilisateur.

Ainsi, l'élément d'interactivité utilisateur n'est présenté à l'utilisateur que si ce dernier visionne le contenu audiovisuel auquel l'élément d'interactivité utilisateur correspond ou la chaîne de télévision sur laquelle ce contenu audiovisuel est diffusé.

Dans un ou plusieurs modes de réalisation, l'application dédiée (102a) de l'équipement utilisateur peut être configurée pour, lorsque l'élément d'interactivité utilisateur peut être présenté par l'application dédiée (102a) de l'équipement utilisateur principal (102) sur l'interface utilisateur, transmettre des informations relatives à l'élément d'interactivité utilisateur à l'équipement utilisateur secondaire, par exemple par le biais d'interfaces applicatives avec lesquelles les applications dédiées (103a, 102a) peuvent communiquer.

L'application dédiée (103a) de l'équipement utilisateur secondaire peut être configurée pour, sur réception des informations relatives à l'élément d'interactivité utilisateur, présenter à son utilisateur tout ou partie de l'élément d'interactivité utilisateur.

Dans ce mode de réalisation de notification vers un équipement utilisateur, le deuxième identifiant de canal de diffusion télévisuelle obtenu sur la base du premier identifiant de canal de diffusion télévisuelle peut être identique à ce premier identifiant. En variante, un transcodage du premier identifiant peut être effectué pour s'adapter à une interface de communication entre la passerelle de synchronisation et le serveur de notifications.

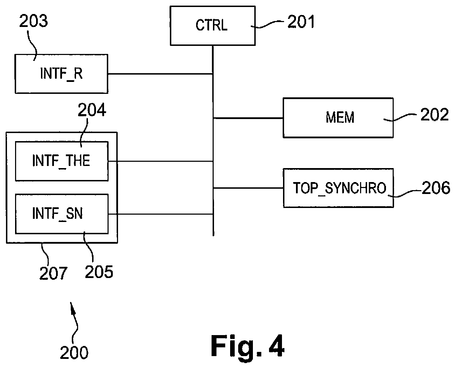

La figure 4 est un diagramme illustrant un dispositif passerelle de synchronisation configuré pour la mise en oeuvre d'un ou de plusieurs modes de réalisation du procédé proposé.

En référence à la figure 4, la passerelle de synchronisation 200 est un dispositif électronique qui comprend un contrôleur 201, une unité mémoire 202, une unité d'interface avec un sous-système de régies (INTF_R) 203, une unité d'interface avec un sous-système tête de réseau (INTF_THE) 204, une unité d'interface avec un serveur de notifications équipement utilisateur (INTF_SN) 205, et une unité de commande de synchronisation 206.

Dans l'architecture illustrée sur la figure 4, l'unité mémoire 202, l'unité d'interface avec un sous-système de régies (INTF_R) 203, l'unité d'interface avec un sous-système tête de réseau (INTF_THE) 204, l'unité d'interface avec un serveur de notifications équipement utilisateur (INTF_SN) 205, et l'unité de commande de synchronisation (TOP_SYNCHRO) 206 sont couplées de manière opérationnelle les unes avec les autres par l'intermédiaire du contrôleur 201.

L'unité mémoire 202 peut comprendre une ou plusieurs mémoires, de type mémoire morte ou ROM (pour « *Read-Only Memory* ») et de type mémoire vive RAM (pour « *Random Access Memory* »), dont une mémoire morte dans laquelle est stocké un programme d'ordinateur exécutable par un processeur du contrôleur 201 de la passerelle de synchronisation 200. L'unité mémoire 202 est de préférence choisie apte à stocker un ensemble d'identifiants d'élément d'interactivité utilisateur (CTA_id) et un ensemble de métadonnées relatives à des contenus audiovisuels, comme par exemple des *PlayLists* telles que décrites ci-dessus, par exemple dans une mémoire RAM. L'unité mémoire 202 peut en outre être choisie apte à stocker une ou plusieurs tables de correspondance entre des identifiants de contenu audiovisuel et des identifiants d'éléments d'interactivité utilisateur, ainsi que des informations d'horodatage de présentation associées.

En fonction du mode de réalisation, la/les mémoires de l'unité mémoire 202 contiennent des instructions de programme d'ordinateur qui, lorsqu'elles sont exécutées par le contrôleur 201, amènent ce contrôleur 201 à effectuer ou contrôler les parties interface avec un sous-système de régies (INTF_R) 203, interface avec un sous-système tête de réseau (INTF_THE) 204, interface avec un serveur de notifications équipement utilisateur (INTF_SN) 205, et commande de synchronisation (TOP_SYNCHRO) 206 des exemples de mise en oeuvre du procédé proposé décrits dans les présentes.

L'interface avec un sous-système de régies (INTF_R) 203 peut être configurée pour recevoir, depuis une ou plusieurs régies de fourniture de contenus audiovisuel, des métadonnées relatives à au moins un contenu audiovisuel dont la diffusion est prévue, les métadonnées comprenant un identifiant de contenu audiovisuel, un premier identifiant de canal de diffusion télévisuelle, et une information d'horodatage, par exemple de diffusion du contenu audiovisuel ou correspondant à un horodatage souhaité de présentation d'élément d'interactivité utilisateur. L'interface avec un sous-système de régies (INTF_R) 203 peut en outre être configurée pour extraire l'identifiant de contenu audiovisuel, le premier identifiant de canal de diffusion télévisuelle, et l'information d'horodatage des données reçues, et stocker dans l'unité mémoire 202 ces données. L'interface avec un sous-système de régies (INTF_R) 203 peut ainsi être configurée, dans un ou plusieurs modes de réalisation, pour recevoir depuis des régies de diffusion des PlayLists contenant des informations de synchronisation, et agréger ces PlayLists, une PlayList étant typiquement reçue par chaine de télévision.

L'unité de commande de synchronisation (TOP_SYNCHRO) 206 peut être configurée pour obtenir, d'une part, un identifiant d'un élément d'interactivité utilisateur à partir de l'identifiant de contenu audiovisuel reçu par l' interface avec un sous-système de régies (INTF_R) 203, par exemple en effectuant une recherche dans une table de correspondance prédéfinie en mémoire 202, et associer à l'identifiant d'élément d'interactivité utilisateur l'information d'horodatage de diffusion du contenu audiovisuel correspondant à l'élément d'interactivité utilisateur, et d'autre part, un deuxième identifiant de canal de diffusion télévisuelle à partir du premier identifiant de canal de diffusion télévisuelle. L'unité de commande de synchronisation (TOP_SYNCHRO) 206 peut en outre être configurée pour obtenir une information d'horodatage de présentation de l'élément d'interactivité utilisateur sur la base de l'information d'horodatage de diffusion du contenu audiovisuel correspondant à l'élément d'interactivité utilisateur, par exemple en appliquant un décalage temporel comme décrit ci-dessus.

L'unité de commande de synchronisation (TOP_SYNCHRO) 206 peut en outre être configurée pour déclencher la transmission d'une requête de présentation de l'élément d'interactivité utilisateur de manière synchronisée avec l'information d'horodatage de présentation de l'élément d'interactivité utilisateur.

L'unité d'interface avec un sous-système tête de réseau (INTFTHE) 204 peut être configurée pour transmettre une requête de présentation de l'élément d'interactivité utilisateur à un système de diffusion de contenus audiovisuels.

L'unité d'interface avec un serveur de notifications équipement utilisateur (INTF_SN) 205 peut être configurée pour transmettre une requête de présentation de l'élément d'interactivité utilisateur à un serveur de notifications équipement utilisateur.

En fonction du mode de réalisation, la passerelle de synchronisation 200 peut comprendre une unité d'interface de transmission de requête de présentation 207 comprenant au moins l'une parmi l'unité d'interface avec un sous-système tête de réseau (INTF_THE) 204 et l'unité d'interface avec un serveur de notifications équipement utilisateur, ou ces deux unités d'interface.

Le contrôleur 201 est configuré pour piloter les unités de la passerelle de synchronisation 200, et en particulier l'unité de commande de synchronisation (TOP_SYNCHRO) 206. Le contrôleur 201 peut comprendre un composant implémentant un ou plusieurs processeurs, et être piloté par une application ou un programme d'ordinateur, configurés pour la mise en oeuvre d'un ou de plusieurs modes de réalisation du procédé proposé. A l'initialisation, les instructions de code du programme d'ordinateur sont par exemple chargées dans une mémoire RAM de l'unité mémoire 202, avant d'être exécutées par un processeur du contrôleur 201.

L'unité d'interface avec un sous-système de régies (INTF_R) 203, l'unité d'interface avec un sous-système tête de réseau (INTF_THE) 204, l'unité d'interface avec un serveur de notifications équipement utilisateur (INTF_SN) 205, et/ou l'unité de commande de synchronisation (TOP _SYNCHRO) 206 peuvent être mises en oeuvre sous forme d'un logiciel (programme d'ordinateur) qui, lorsqu'il est chargé dans une mémoire de l'unité mémoire 202 et exécuté par un processeur de la passerelle de synchronisation 200, met en oeuvre la commande de synchronisation selon le procédé proposé. En outre, l'unité d'interface avec un sous-système de régies (INTF_R) 203, l'unité d'interface avec un sous-système tête de réseau (INTF_THE) 204, l'unité d'interface avec un serveur de notifications équipement utilisateur (INTF_SN) 205, et/ou l'unité de commande de synchronisation (TOP_SYNCHRO) 206 peuvent être mises en oeuvre sous forme logicielle, comme décrit ci-dessus, ou sous forme matérielle, comme un circuit intégré spécifique application (en anglais « *Application-Specific Integrated Circuit* », ou ASIC), ou sous forme d'une combinaison d'éléments matériels et logiciels, comme par exemple un programme logiciel destiné à être chargé et exécuté sur un composant de type FPGA (« *Field Programmable Gate Array* »)*.*

L'architecture de la passerelle de synchronisation illustrée sur la figure 4 n'est toutefois pas limitative. La passerelle de synchronisation peut être un ordinateur ou un réseau d'ordinateurs, ou un autre appareil comportant un processeur couplé de manière opérationnelle à une mémoire, ainsi que, selon le mode de réalisation choisi, d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc.

En fonction du mode de réalisation choisi, certains actes, actions, événements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou événements sont effectués ou se produisent concurremment et non pas successivement.

Bien que décrits à travers un certain nombre d'exemples de réalisation détaillés, le procédé d'encodage proposé et l'équipement pour la mise en oeuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

Annexe 1: Exemple de format de requête HTTP reçue par la passerelle de synchronisation :
**Méthode HTTP:** « PUT » pour la création et la mise à jour de Playlist.
**En-tête HTTP:** Content-Type: précise le format de données utilisé pour les requêtes: application/xml

### URL:

La première partie est l'hôte à utiliser: http://@IP:@port
La deuxième partie identifie l'api et sa version: par ex. : /api/v1/playlist
La troisième partie identifie le **fournisseur de la PlayList:** nom de la régie source de Playlist auquel est adjointe un identifiant unique pour chaque régie. Ex: regie_CH2_$093
La quatrième partie identifie la chaine TV sur laquelle porte la Playlist : Ex: CH2_NEWS
Exemple d'URL: [host]/api/v1/playlist/regie_CH2_$093/CH2_NEWS
**Corps du message HTTP:** Le corps du message contient la liste des entrées Top Synchros au format xml.

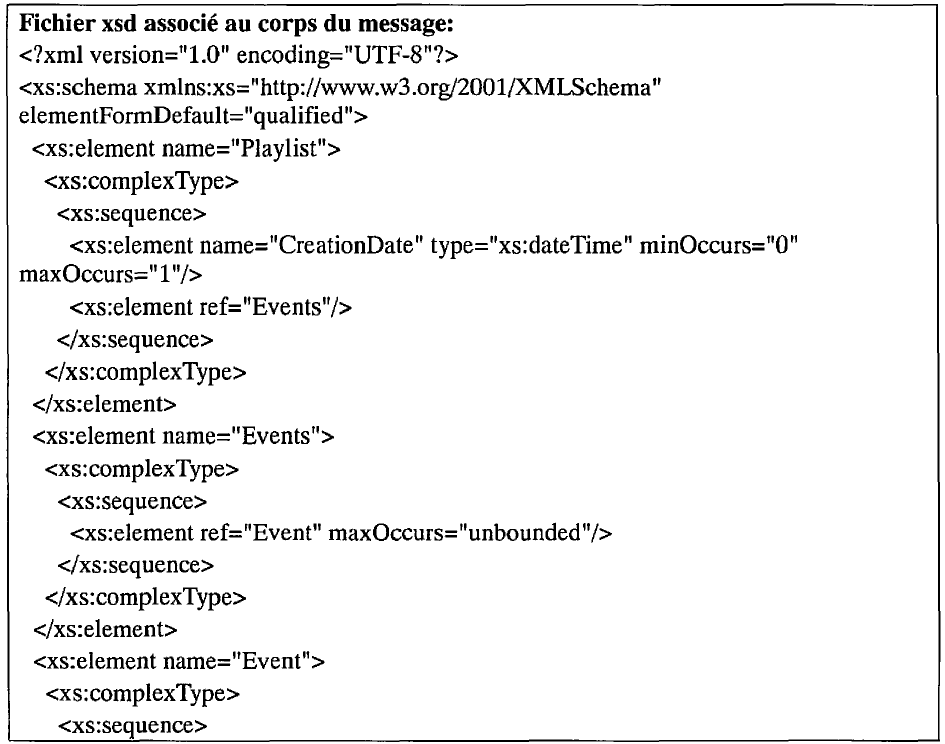

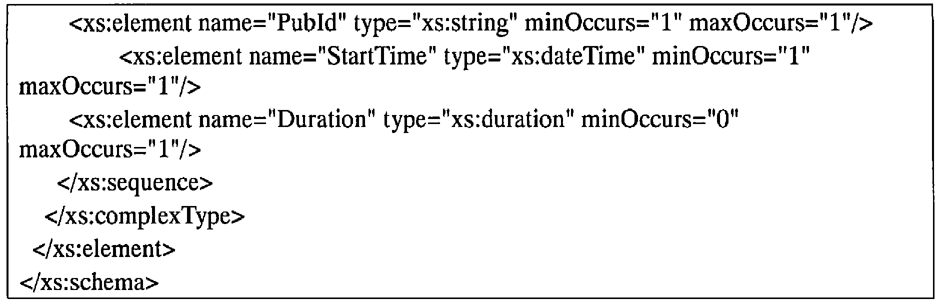

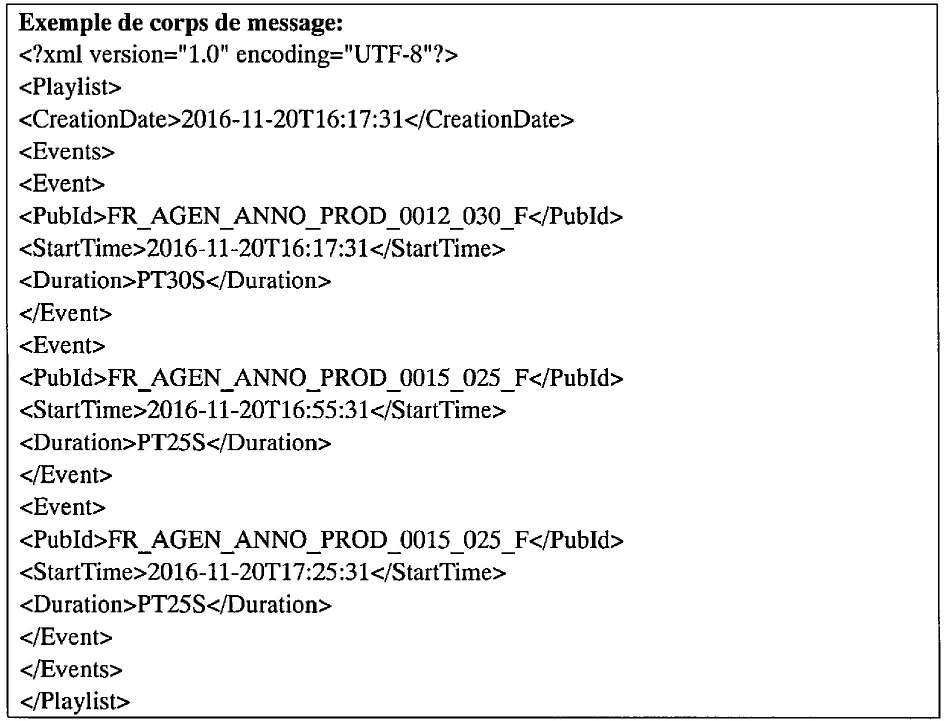

Annexe 2 : Exemple de format de réponse à requête HTTP transmise par la passerelle de synchronisation :
Objet XML avec les données suivantes :
- Si aucune erreur n'a eu lieu, un objet XML est renvoyé avec les résultats de l'appel. (typiquement la playlist mise à jour)
- Si une erreur a eu lieu, un objet XML décrivant l'erreur est renvoyé.

| Exemple 1: |
|---|
| ```
 <?xml version="1.0" encoding="UTF-8"?>
 <error>
     <message>Non-conforming XML request</message>
     <status>400</status>
 </error>
``` |
| |

| Exemple 2: |
|---|
| ```
 <?xml version="1.0" encoding="UTF-8"?>
 <error>
     <message>Unkown identifiers or wrong values in request</message>
     <status>400</status>
     <wrongPubIds>
       <PubId>FR_AGEN_ANNO_PROD_0015_025_F</PubId>
       <PubId>FR_AGEN_ANNO_PROD_0015_027_F</PubId>
     </wrongPubIds>
     <unknownChannels>
         <channel>PARIS.PREMI </channel>
         <channel>PARIS.PREMIER </channel>
     </unknownChannels>
     <wrongStartTimes>
         <StartTime>2016-11-20T17:25:31</StartTime>
         <StartTime>2016-11-20T19:25:31</StartTime>
       </wrongStartTimes>
 </error>
``` |

## Revendications

1. Procédé de commande de synchronisation comprenant, dans un équipement passerelle de synchronisation :
recevoir des premières métadonnées relatives à un premier contenu audiovisuel, les métadonnées comprenant un identifiant de contenu audiovisuel, un premier identifiant de canal de diffusion télévisuelle, et une information d'horodatage ;
obtenir un identifiant d'un élément d'interactivité utilisateur à partir de l'identifiant de contenu audiovisuel ;
obtenir une information d'horodatage de présentation d'un élément d'interactivité utilisateur à partir de l'information d'horodatage reçue ;
transmettre, de manière synchronisée avec l'information d'horodatage de présentation de l'élément d'interactivité, une requête de présentation de l'élément d'interactivité utilisateur correspondant à l'identifiant d'élément d'interactivité utilisateur, la requête comprenant l'identifiant de l'élément d'interactivité utilisateur.

2. Procédé selon la revendication 1, dans lequel la requête de présentation de l'élément d'interactivité utilisateur est transmise à un système de diffusion de contenus audiovisuels pour présentation de l'élément d'interactivité utilisateur par affichage sur un écran d'un dispositif de restitution d'un utilisateur d'un deuxième contenu audiovisuel correspondant à l'élément d'interactivité utilisateur.

3. Procédé selon la revendication 2, dans lequel la requête de présentation de l'élément d'interactivité utilisateur est transmise à un serveur d'insertion d'élément de description (EIT) du système de diffusion de contenus audiovisuels.

4. Procédé selon la revendication 2, dans lequel la requête de présentation de l'élément d'interactivité utilisateur comprend en outre une information de durée de présentation de l'élément d'interactivité utilisateur par affichage sur l'écran du deuxième contenu audiovisuel.

5. Procédé selon la revendication 1, dans lequel la requête de présentation de l'élément d'interactivité utilisateur est transmise à un équipement utilisateur pour présentation de l'élément d'interactivité utilisateur sur une interface utilisateur de l'équipement utilisateur.

6. Procédé selon l'une quelconque des revendications précédentes, dans lequel l'information d'horodatage reçue comprend une estampille temporelle de diffusion du premier contenu audiovisuel, ou comprend une estampille temporelle requise de présentation de l'élément d'interactivité utilisateur.

7. Procédé selon l'une quelconque des revendications précédentes, comprenant en outre : recevoir des deuxièmes métadonnées relatives au premier contenu audiovisuel, les deuxièmes métadonnées comprenant l'identifiant de contenu audiovisuel et une deuxième information d'horodatage de diffusion du premier contenu audiovisuel, et mettre à jour la deuxième information d'horodatage de diffusion du premier contenu audiovisuel avec la première information d'horodatage de diffusion du premier contenu audiovisuel.

8. Procédé selon l'une quelconque des revendications précédentes, dans lequel la première information d'horodatage de diffusion du premier contenu audiovisuel comprend un horodatage de début de diffusion du premier contenu audiovisuel, et la deuxième information d'horodatage de présentation de l'élément d'interactivité utilisateur correspond à l'horodatage de début de diffusion du premier contenu audiovisuel auquel un décalage temporel est appliqué.

9. Procédé selon l'une quelconque des revendications 1 à 8, comprenant en outre :
- une étape d'obtention d'un deuxième identifiant de canal de diffusion télévisuelle à partir du premier identifiant de canal de diffusion télévisuelle,
ledit deuxième identifiant de canal de diffusion télévisuelle étant transmis dans ladite requête de présentation de l'élément d'interactivité utilisateur.

10. Dispositif passerelle de synchronisation comprenant : un contrôleur comprenant un processeur, une unité d'interface comprenant une unité d'interface avec un sous-système tête de réseau et/ou une unité d'interface avec un serveur de notifications équipement utilisateur, une mémoire, et une unité de commande de synchronisation couplées de manière opérationnelle au contrôleur, et configurées pour la mise en oeuvre d'un procédé de commande de synchronisation selon l'une quelconque des revendications 1 à 9.

11. Programme d'ordinateur, chargeable dans une mémoire associée à un processeur, et comprenant des portions de code pour la mise en oeuvre d'un procédé selon l'une quelconque des revendications 1 à 9 lors de l'exécution dudit programme par le processeur.

12. Ensemble de données représentant, par exemple par voie de compression ou d'encodage, un programme d'ordinateur selon la revendication 11.

13. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à une mémoire et à un module d'interface entrées/sorties, conduire l'ordinateur à commander la synchronisation de la présentation d'un élément d'interactivité utilisateur selon le procédé de l'une quelconque des revendications 1 à 9.
